# FASCICULE DE BREVET EUROPEEN

(11) **EP 0 589 804 B1**
(45) Date de publication et mention de la délivrance du brevet: **27.03.1996**
(21) Numéro de dépôt: 93420361.3
(22) Date de dépôt: 08.09.1993
(51) Int. Cl.: H02G 3/06

(54) **Boîtier électrique à passage étanche d'un câble d'alimentation**
Elektrisches Gehäuse mit abgedichteter Durchführung für Speisekabel
Electrical housing with sealed feed cable entry

(30) Priorité: 21.09.1992 FR 9211304
(43) Date de publication de la demande: 30.03.1994
(73) Titulaire: ZEDEL, F-38920 Crolles (FR)
(72) Inventeur: Maurice, Alain, F-38610 Gieres (FR)
(74) Mandataire: Hecké, Gérard

(56) Documents cités:
- DE-A- 2 835 832
- FR-A- 644 510
- GB-A- 2 095 051
- US-A- 4 713 021

## Description

L'invention est relative à un boîtier étanche en matériau plastique pour le logement d'un appareillage électrique, comprenant une paroi équipée d'un embout de passage d'un câble d'alimentation par un orifice, et des moyens d'étanchéité destinés à obturer le jeu ménagé entre l'orifice et la face extérieure du câble.

Les moyens d'étanchéité connus pour rendre le boîtier étanche au niveau d'une traversée d'un câble ou d'un conduit sont généralement conformés en presse-étoupes. Le système de presse-étoupe fait usage d'une bague d'étanchéité de forme annulaire agencée entre deux surfaces de serrage, et d'un organe d'actionnement destiné à rapprocher les deux surfaces de serrage pour écraser la bague d'étanchéité, entraînant l'obturation du jeu radial restant entre l'orifice et le câble. Un tel système nécessite la mise en oeuvre de plusieurs pièces, avec un temps de montage relativement important qui augmente le coût de fabrication du boîtier.

Un premier objet de l'invention consiste à simplifier le montage d'une traversée étanche d'un câble électrique, et à en réduire le coût de fabrication.

Un deuxième objet de l'invention consiste à utiliser un élément de la traversée étanche pour des fonctions auxiliaires, notamment de support d'accessoires à l'intérieur du boîtier.

La traversée étanche selon l'invention est caractérisée en ce que :
- l'embout du boîtier comporte une bride d'appui flexible agencée autour du câble lors de son introduction dans l'orifice,
- une pièce auxiliaire de blocage est rapportée sur l'embout entraînant la déformation élastique de la bride et une action simultanée de coincement du câble dans la zone d'étanchéité,
- une surface de serrage en forme de coin rigide de ladite pièce de blocage coopère avec la bride pour assurer un serrage progressif du câble lors du déplacement relatif de ladite pièce à partir d'une position déverrouillée vers une position verrouillée,
- la pièce de blocage est solidarisée à une deuxième paroi intercalaire isolante de support d'un organe électrique agencé à l'intérieur du boîtier.

En plus de sa fonction de serrage pour assurer l'étanchéité de la traversée du câble, la pièce de blocage remplit des fonctions auxiliaires de support d'accessoires, ou de maintien du câble à l'intérieur du boîtier.

Selon un premier mode de réalisation concernant un boîtier pour piles, la deuxième paroi subdivise le volume interne du boîtier en deux compartiments adjacents renfermant respectivement les piles, et les conducteurs du câble d'alimentation associé à la traversée étanche, ladite deuxième paroi servant de support à une paire de contacts pour la connexion des piles.

Selon un deuxième mode de réalisation concernant une lampe d'éclairage électrique, la deuxième paroi sert de support à l'ampoule électrique, et subdivise le volume interne du boîtier en deux compartiments adjacents renfermant respectivement le réflecteur de la lampe, et les conducteurs du câble d'alimentation.

D'autres caractéristiques ressortiront plus clairement de la description qui va suivre de plusieurs modes de réalisation donnés à titre d'exemples non limitatifs, et représentés aux dessins annexés, dans lesquels :
- la figure 1 est une vue éclatée en coupe d'un boîtier équipé d'une traversée de câble selon l'invention;
- la figure 2 montre une vue identique de la figure 1 en position montée de la traversée étanche ;
- la figure 3 représente une coupe selon la ligne 3-3 de la figure 2 ;
- la figure 4 est une vue identique de la figure 3 d'une variante de réalisation ;
- la figure 5 est une vue éclatée similaire à la figure 1 d'une autre variante de réalisation ;
- la figure 6 montre une vue identique à la figure 5 en position montée de la traversée ;
- la figure 7 représente une vue en coupe d'un boîtier de piles ou accumulateurs électriques ;
- la figure 8 est une vue identique à la figure 7 pour un boîtier d'une lampe d'éclairage ;

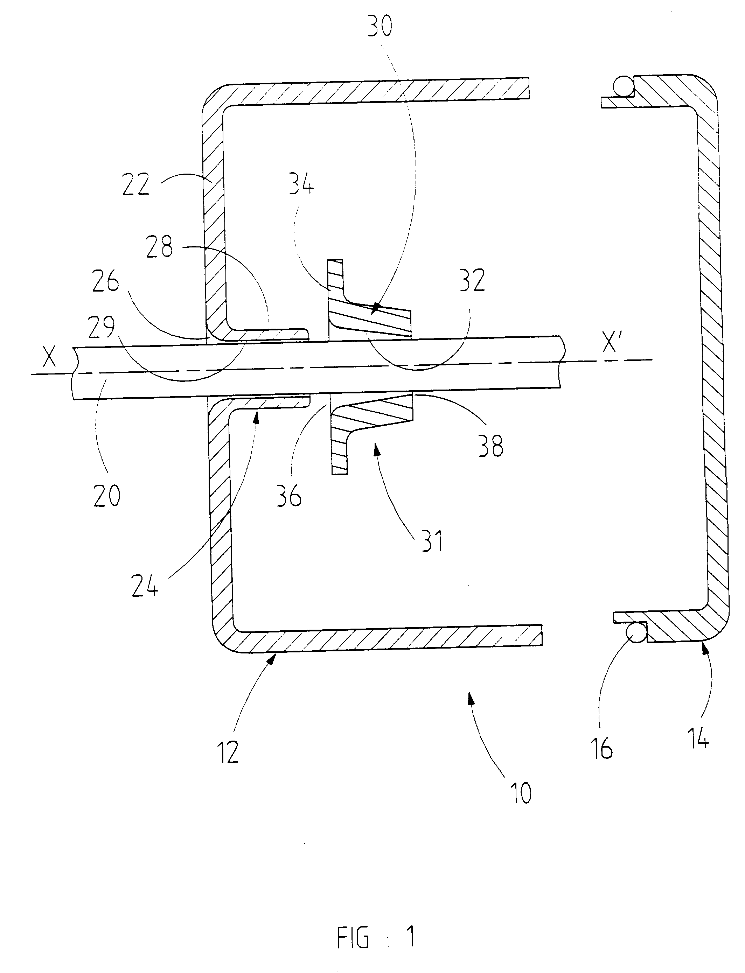

En référence aux figures 1 à 3, un boîtier 10 étanche réalisé en matériau plastique est composé d'un socle 12 sur lequel peut être rapporté un couvercle 14 d'obturation avec interposition d'un joint 16 d'étanchéité. Le volume interne 18 du boîtier 10 sert de logement à un appareil électrique (non représenté), lequel est relié à l'extérieur par un câble 20 électrique d'alimentation.

La paroi 22 du socle 12 comporte un embout 24 tubulaire délimitant un orifice 26 de passage du câble 20. L'embout 24 est orienté vers l'intérieur du boîtier 10, et possède une bride d'appui 28 déformable en forme de collerette ayant une section latérale interne de révolution épousant celle du câble 20. La bride 28 vient de moulage avec le socle 12, et sert d'organe de maintien du câble 20 après mise en place autour de la bride 28 d'une pièce auxiliaire de blocage 30.

Un jeu 29 radial est ménagé entre la bride 28 et le câble 20 pour faciliter l'insertion de ce dernier dans l'embout 24. L'épaisseur de la paroi de la collerette 28 est inférieure à celle de la paroi 22 du socle 12 de manière à rendre l'embout 24 flexible, autorisant sa déformation suite à l'action de coincement de la pièce de blocage 30.

La pièce de blocage 30 est agencée en forme de plot ou bouton creux 31 ayant une surface de serrage 32 destinée à venir en engagement avec la face latérale extérieure de la bride 28. La surface de serrage 32 est située à l'intérieur du bouton, et présente avantageusement une forme tronconique raccordée à une embase ou butée 34 s'étendant perpendiculairement à la bride 28.

La première ouverture 36 de la pièce de blocage 30, située du côté de l'embase 34, est plus grande que le profil extérieur de la collerette 28. La dimension de la deuxième ouverture 38 opposée du bouton creux 31 correspond sensiblement au diamètre ou au profil extérieur du câble 20. La pièce de blocage 30 est rigide le long de la surface de serrage 32 pour renforcer la transmission et l'application de l'effort de verrouillage sur la collerette 28 flexible.

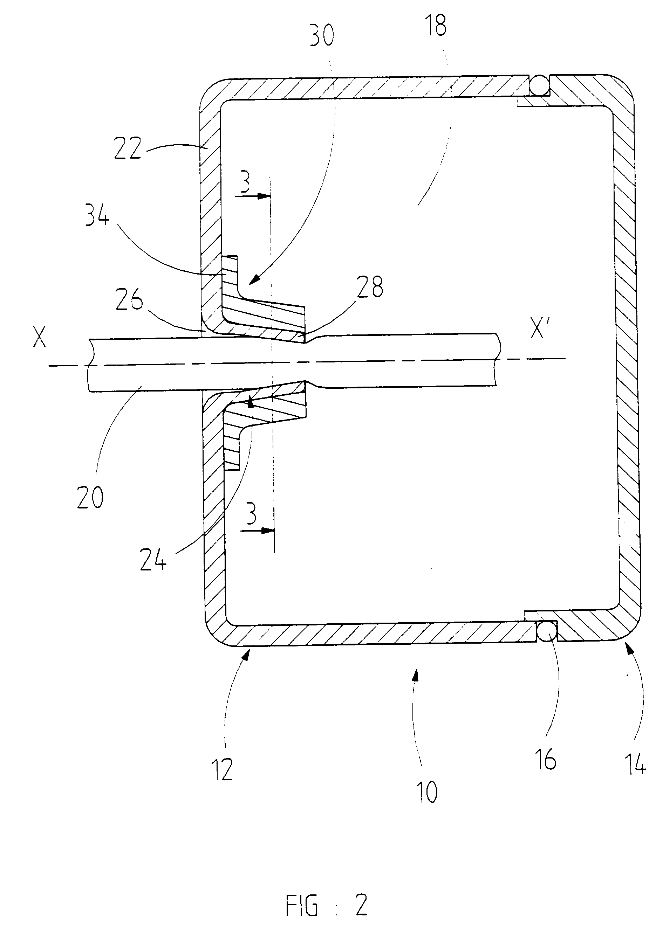

La mise en oeuvre de la traversée étanche du câble 20 dans le boîtier 10 selon les figures 1 et 2 s'opère de la manière suivante :

Sur la figure 1, le câble 20 est d'abord introduit dans le boîtier 10 par l'orifice 26 de l'embout 24. On monte ensuite le bouton creux 31 de la pièce de blocage 30 sur la câble 20 à l'intérieur du socle 12, en orientant la première ouverture 36 du côté de la collerette 28. La pièce de blocage 30 se trouve en position déverrouillée, et s'étend coaxialement avec l'embout 24 dans la direction XX' d'enfoncement du câble 20. La présence du jeu 29 au niveau de la collerette 28, et celui au niveau de la deuxième ouverture 38 de la pièce de blocage 30 facilitent la mise en place du câble 20 au cours d'une première phase de montage. On remarque que la collerette 28 épouse sensiblement la forme cylindrique du câble 20 le long de la traversée dans l'embout 24.

Pendant la deuxième phase de montage illustrée sur la figure 2, la pièce de blocage 30 est poussée en translation sur l'embout 24 le long de la direction XX' d'enfoncement du câble 20. La réaction de la surface de serrage 32 tronconique exercée sur la face extérieure de la collerette 28 cylindrique au cours du déplacement relatif de la pièce de blocage 30 provoque une déformation élastique progressive de la collerette 28 flexible de l'embout 24, de manière à engendrer une force de serrage sur le câble 20. En fin de course d'enfoncement de la pièce de blocage 30, l'embase 34 vient en butée contre la paroi 22 interne du socle 12, et le coincement du câble 20 est maximum au niveau de la deuxième ouverture 38 de la pièce de blocage 30.

Dans une troisième phase, l'embase 34 est ensuite solidarisée à la paroi 22 du boîtier par tout moyen de fixation, notamment par sertissage, clipsage, rivetage ou collage. La pièce de blocage 30 se trouve alors maintenue dans une position verrouillée permettant de conserver en permanence l'étanchéité dans la zone de serrage du câble 20. Le câble 20 peut ensuite être raccordé à l'appareil électrique à l'intérieur du boîtier 10, suivi de la mise en place du couvercle 14 d'obturation.

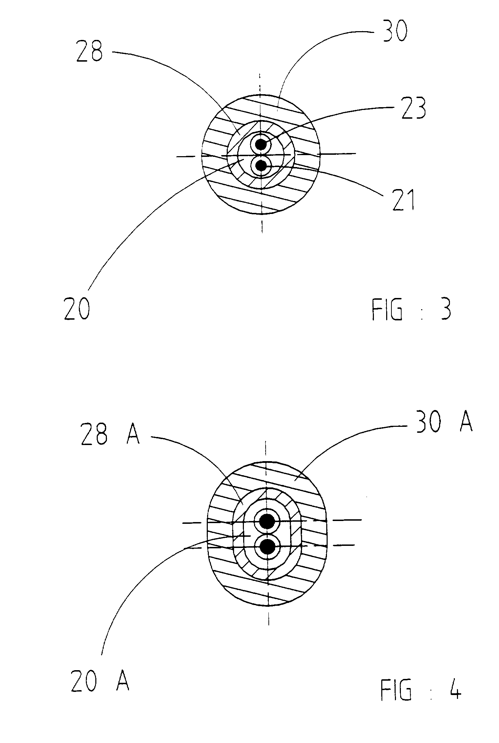

La figure 3 montre la coupe transversale dans la zone de serrage selon la figure 2, pour un câble 20 à section circulaire et à deux fils 21, 23 d'alimentation enrobés dans une gaine isolante cylindrique. L'embout 24 présente initialement une forme cylindrique, et coopère avec une surface de serrage 32 tronconique de la pièce de blocage 30.

Lors de l'usage d'un câble 20 cylindrique, il serait possible de rapporter la pièce de blocage 30 sur l'embout 24 par un mouvement de vissage. Il suffit de prévoir les filetages appropriés sur la face extérieure de la collerette 28 cylindrique, et le long de la surface de serrage 32 tronconique de la pièce de blocage 30, laquelle joue le rôle d'un écrou. En fin de course de vissage, la pièce de blocage 30 est alors automatiquement maintenue en position verrouillée sans nécessiter une opération supplémentaire de fixation avec le boîtier 10.

Il est également possible de remplacer le câble 20 cylindrique de la figure 3 par un câble 20A plat, tel que représenté sur la figure 4. Le câble 20A et sa gaine isolante de protection présente une forme oblongue. La collerette 28 K de l'embout 24 correspondant possède une section identique à celle du câble 20A, et la surface de serrage 32 de la pièce de blocage 30 est un tronc de révolution de section oblongue. Toute autre section peut être utilisée selon la nature du câble 20 d'alimentation traversant l'embout 24.

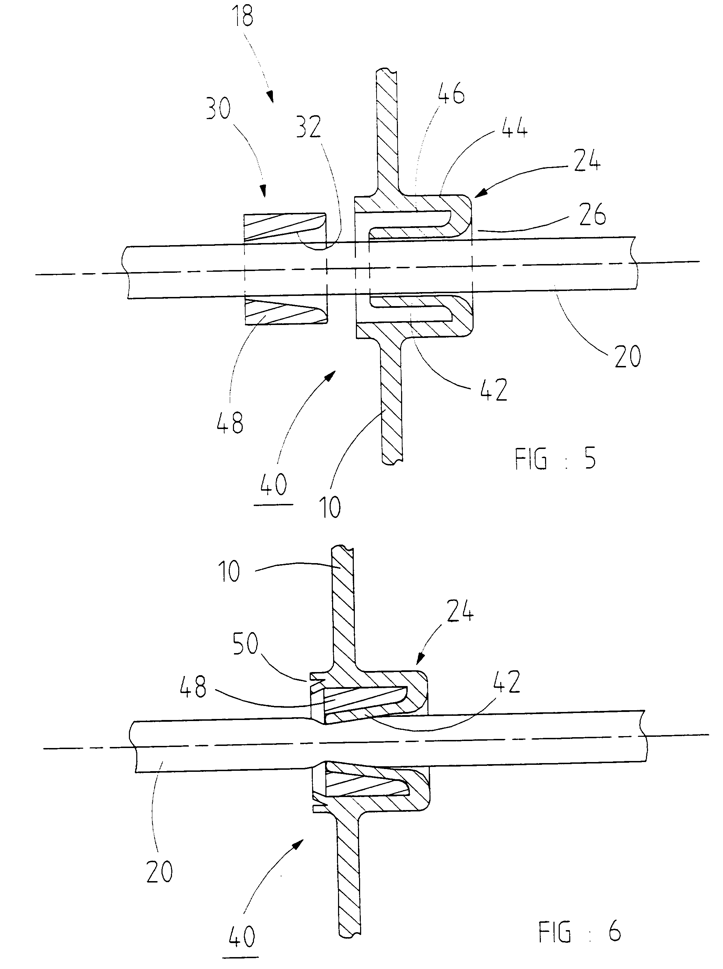

Les figures 5 et 6 montrent un autre mode de réalisation d'une traversée 40 étanche d'un câble 20, dans laquelle l'embout 24 du boîtier 10 comporte une lèvre 42 flexible qui est raccordée à la paroi du boîtier 10 par une protubérance 44 faisant saillie vers l'extérieur du volume interne 18. La protubérance 44 est rigide et s'étend perpendiculairement à la paroi du boîtier 10 de manière à former avec la lèvre 42 un logement 46 annulaire de réception de la pièce de blocage 30.

Sur la figure 5, la lèvre 42 flexible entoure coaxialement le câble 20 avec interposition d'un jeu radial, et la pièce de blocage 30 est enfilée sur le câble en regard du logement 46 annulaire de l'embout 24. La pièce de blocage 30 est formée par un plot 48 creux équipé d'une surface de serrage 32 en forme de coin comparable à celle des figures 1 et 2. L'insertion par translation du plot 48 dans le logement 46 annulaire de l'embout 24 provoque la déformation élastique de la lèvre 42 qui vient serrer progressivement le câble 20 en exerçant une pression assurant l'étanchéité de la traversée 40 (figure 6).

La pièce de blocage 30 est maintenue en position verrouillée dans le logement 46 par des moyens d'aggripage 50 rendus actifs par une opération de sertissage en fin de course d'insertion du plot 48.

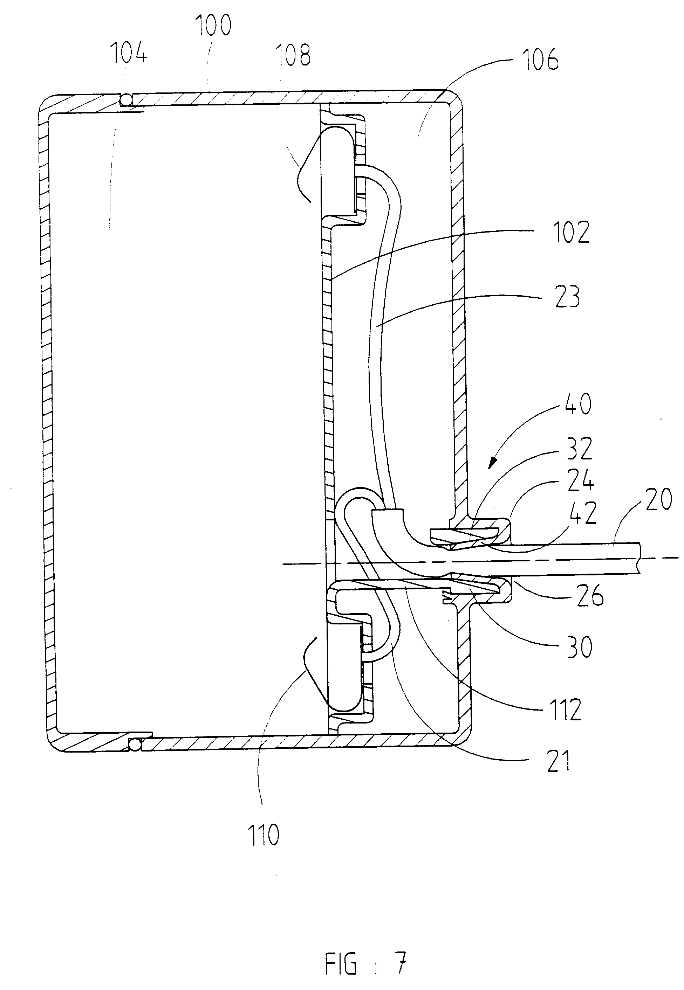

Sur la figure 7, la traversée 40 conforme aux figures 5 et 6, est appliquée à un boîtier 100 de piles ou d'accumulateurs électriques. Le boîtier 100 est subdivisé par une paroi 102 intercalaire en deux compartiments 104, 106 adjacents, dont l'un 104 (à gauche) renferme les piles ou les accumulateurs, et dont l'autre 106 (à droite) reçoit les conducteurs 21, 23 du câble 20 d'alimentation associé à la traversée 40 étanche. La paroi 102 isolante de séparation des deux compartiment 104, 106 sert de support à une paire de contacts 108, 110 électriques en forme de lames conductrices, raccordées électriquement aux deux conducteurs 21, 23. Les deux contacts 108, 110 sont logés dans le compartiments 104 pour la connexion électrique des piles. On remarque que la pièce de blocage 30 de la traversée 40 étanche du câble 20 est reliée mécaniquement à la paroi 102 de support des contacts 108, 110 par un élément de liaison 112. L'ensemble paroi 102, élément de liaison 112 et le plot 48 de la pièce de blocage 30 forme une partie monobloc en matériau isolant moulé.

L'action de coincement du câble 20 dans la traversée 40 résultant de la pression de la pièce de blocage 30 intervient automatiquement lors de la mise en place de la paroi 102 dans des rainures de positionnement (non représentées) du boîtier 100.

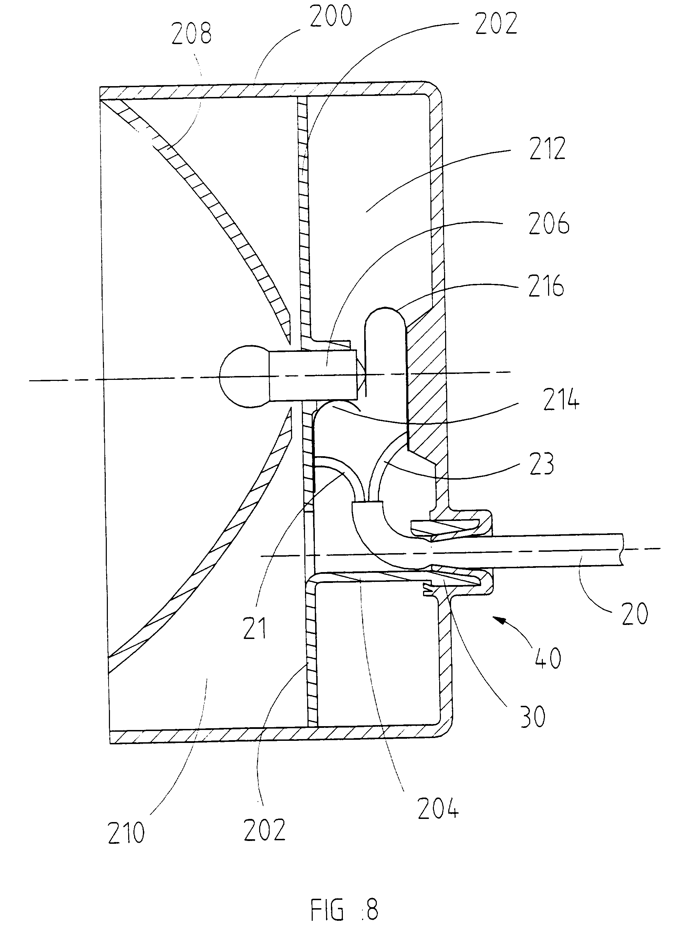

Sur la figure 8, la traversée 40 selon les figures 5 et 6 fait partie d'un boîtier 200 étanche d'une lampe d'éclairage électrique. La pièce de blocage 30 de la traversée 40 est reliée d'une manière similaire à une paroi intercalaire 202 par un élément de liaison 204. La paroi 202 sert de support à l'ampoule 206 électrique s'étendant perpendiculairement à la paroi 202. La partie éclairante de l'ampoule 206 est entourée par un réflecteur 208 logé dans le compartiment 210 de gauche. A l'opposé le culot de l'ampoule 206 est alimenté dans l'autre compartiment 212 de droite par deux contacts 214, 216 en liaison électrique avec les deux conducteurs 21, 23 du câble 20.

Dans les deux modes d'utilisation des figures 7 et 8, la pièce de blocage 30 de la traversée 40 étanche exerce une première fonction de serrage de la lèvre 42 élastique sur le câble au niveau de l'orifice 26 de l'embout 28, et une deuxième fonction de support et de maintien d'un accessoire électrique, notamment des contacts 108, 110, ou une ampoule 206 d'éclairage.

Selon une variante des figures 1 et 2, l'embout 24 est orienté dans le sens opposé vers l'extérieur du boîtier 10, et la pièce de blocage 30 est rapportée sur la collerette 28 à l'extérieur du volume interne 18 du boîtier 10.

## Revendications

1. Boîtier étanche en matériau plastique pour le logement d'un appareillage électrique, comprenant une première paroi (22) équipée d'un embout (24) de passage d'un câble (20) d'alimentation à travers un orifice (26), et des moyens d'étanchéité destinés à obturer le jeu ménagé entre l'orifice (26) et la face extérieure du câble (20),
caractérisé en ce que :
- l'embout (24) du boîtier (10, 100, 200) comporte une bride d'appui (28, 42) flexible agencée autour du câble (20) lors de son introduction dans l'orifice (26),
- une pièce auxiliaire de blocage (30) est rapportée sur l'embout (24) entraînant la déformation élastique de la bride (28, 42) et une action simultanée de coincement du câble (20) dans la zone d'étanchéité,
- une surface de serrage (32) en forme de coin rigide de ladite pièce de blocage (30) coopère avec la bride (28, 42) pour assurer un serrage progressif du câble (20) lors du déplacement relatif de ladite pièce (30) à partir d'une position déverrouillée vers une position verrouillée,
- la pièce de blocage (30) est solidarisée à une deuxième paroi (102, 202) intercalaire isolante de support d'un organe électrique (108, 110, 206) agencée à l'intérieur du boîtier (100, 200).

2. Boîtier étanche selon la revendication 1, utilisé pour le logement de piles ou d'accumulateurs électriques, caractérisé en ce que la deuxième paroi (102) subdivise le volume interne du boîtier (100) en deux compartiments (104, 106) adjacents renfermant respectivement les piles, et les conducteurs (21, 23) du câble (20) d'alimentation associé à la traversée (40) étanche, ladite deuxième paroi (102) servant de support à une paire de contacts (108, 110) pour la connexion des piles.

3. Boîtier étanche selon la revendication 1, utilisé pour une lampe d'éclairage électrique, caractérisé en ce que la deuxième paroi (202) sert de support à l'ampoule (206) électrique, et subdivise le volume interne du boîtier (200) en deux compartiments (210, 212) adjacents renfermant respectivement le réflecteur (208) de la lampe, et les conducteurs (21, 23) du câble (20) d'alimentation.

4. Boîtier étanche selon la revendication 2 ou 3, caractérisé en ce que la bride (28, 42) flexible vient de moulage avec le boîtier (10), et que la pièce de blocage (30) est conformée en bouton ou plot (31, 48) creux traversé par le câble (20), ladite surface de serrage (32) étant agencée à l'intérieur du bouton (31, 48) pour définir un volume tronqué de section adaptée au câble (20).

5. Boîtier étanche selon la revendication 4, caractérisé en ce que la surface de serrage (32) possède une forme tronconique, en s'étendant entre une première ouverture (36) et une deuxième ouverture (38) du bouton (31, 48) creux, la première ouverture (36) située en regard de la bride (28, 42) ayant un diamètre supérieur à celui de ladite bride en position déverrouillée du bouton (31, 48), et que la deuxième ouverture (38) opposée possède un diamètre inférieur à celui de la première ouverture (36).

6. Boîtier étanche selon la revendication 5, caractérisé en ce que la pièce de blocage (30) est dotée d'une butée (34) de fin de course agencée au niveau de la première ouverture (36) pour venir en engagement contre la paroi (22) du boîtier (10) en position verrouillée de ladite pièce (30), correspondant à l'état de serrage maximum du câble (20).

7. Boîtier étanche selon l'une des revendications 1 à 6, caractérisé en ce que la pièce de blocage (30) en position verrouillée dans l'embout (24) est solidarisée à la paroi du boîtier (10) par des moyens de fixation, la pression sur la bride (28, 42) s'exerçant à l'intérieur ou à l'extérieur du boîtier (10) selon le positionnement de ladite pièce (30).

8. Boîtier étanche selon l'une des revendications 1 à 7, caractérisé en ce que la pièce de blocage (30) est conformée en écrou rapporté par vissage sur la bride (28, 42).

9. Boîtier étanche selon l'une des revendications 1 à 8, caractérisé en ce que la bride (42) flexible de l'embout (24) est agencée en lèvre élastique raccordée à une protubérance (44) rigide du boîtier (10) pour définir un logement (46) annulaire de réception de la pièce de blocage (30).

## Claims

1. A tightly sealed casing made of plastic material for housing an electrical apparatus, comprising a first wall (22) equipped with an end piece (24) for the passage of a power supply cable (20) through an orifice (26), and sealing means designed to seal off the clearance arranged between the orifice (26) and the external face of the cable (20),
characterized in that
- the end piece (24) of the casing (10, 100, 200) comprises a flexible bearing flange (28, 42) arranged around the cable (20) when the latter is inserted in the orifice (26),
- an auxiliary securing part (30) is tightened onto the end piece (24) bringing about elastic deformation of the flange (28, 42) and a simultaneous clamping action of the cable (20) in the sealing zone,
- a clamping surface (32) of said securing part (30) in the shape of a rigid wedge cooperates with the flange (28, 42) to ensure progressive clamping of the cable (20) when relative movement of said part (30) takes place from a released position to a secured position,
- the securing part (30) is securedly united to a second insulating separating wall (102, 202) supporting an electrical component (108, 110, 206) arranged inside the casing (100, 200).

2. The tightly sealed casing according to claim 1, used for housing electrical batteries or accumulators, characterized in that the second wall (102) subdivides the internal volume of the casing (100) into two adjacent compartments (104, 106) respectively containing the batteries, and the conductors (21, 23) of the power supply cable (20) associated with the tight passage (40), said second wall (102) acting as support for a pair of contacts (108, 110) for connection of the batteries.

3. The tightly sealed casing according to claim 1, used for an electrical lighting lamp, characterized in that the second wall (202) acts as support for the electric light bulb (206), and subdivides the internal volume of the casing (200) into two adjacent compartments (210, 212) respectively housing the reflector (208) of the lamp, and the conductors (21, 23) of the power supply cable (20).

4. The tightly sealed casing according to claim 2 or 3, characterized in that the flexible flange (28, 42) is molded with the casing (10), and that the securing part (30) is shaped as a hollow button or stud (31, 48) through which the cable (20) passes, said clamping surface (32) being arranged inside the button (31, 48) to define a truncated volume of a cross-section suitable for the cable (20).

5. The tightly sealed casing according to claim 4, characterized in that the clamping surface (32) has a frustum shape, extending between a first opening (36) and a second opening (38) of the hollow button (31, 48), the first opening (36) situated facing the flange (28, 42) having a larger diameter than that of said flange in the released position of the button (31, 48), and that the opposite second opening (38) has a smaller diameter than that of the first opening (36).

6. The tightly sealed casing according to claim 5, characterized in that the securing part (30) is provided with an end-of-travel stop (34) arranged at the level of the first opening (36) to come into engagement against the wall (22) of the casing (10) in the secured position of said part (30), corresponding to the maximum tightening state of the cable (20).

7. The tightly sealed casing according to one of the claims 1 to 6, characterized in that the securing part (30) in the secured position in the end piece (24) is securedly united to the wall of the casing (10) by fixing means, the pressure on the flange (28, 42) being exerted inside or outside the casing (10) depending on the positioning of said part (30).

8. The tightly sealed casing according to one of the claims 1 to 7, characterized in that the securing part (30) is shaped as a nut tightened by screwing onto the flange (28, 42).

9. The tightly sealed casing according to one of the claims 1 to 8, characterized in that the flexible flange (42) of the end piece (24) is arranged as a flexible lip connected to a rigid protuberance (44) of the casing (10) to define an annular housing (46) for accommodating the securing part (30).

## Patentansprüche

1. Dichtes Gehäuse aus Kunststoff für die Unterbringung von elektrischem Gerät, mit einer Wand (22), die mit einem Endstück (24) versehen ist zum Durchgang eines Speisekabels (20) durch eine Öffnung (26), und Dichtungsmittel, die dazu bestimmt sind, das zwischen der Öffnung (26) und der Aussenseite des Kabels (20) vorgesehene Spiel abzudichten, dadurch gekennzeichnet, dass :
- das Endstück (24) des Gehäuses (10, 100, 200) einen flexiblen Flansch (28, 42) aufweist, der um das Kabel (20) herum bei seiner Einführung in die Öffnung (26) angeordnet ist,
- ein Blockierungs-Hilfsteil (30) auf dem Endstück (24) aufgesetzt ist, was die elastische Verformung des Flansches (28, 42) und eine gleichzeitige Klemmwirkung des Kabels (20) in der Dichtungszone bewirkt,
- eine Klemmfläche (32) in Form einer steifen Ecke des genannten Blockierungsteiles (30) mit dem Flansch (28, 42) zusammenarbeitet, um ein progressives Klemmen des Kabels (20) zu gewährleisten während der relativen Verschiebung des genannten Teils (30) von einer unverriegelten Stellung in eine verriegelte Stellung,
- das Blockierungsteil (30) mit einer zweiten isolierenden Zwischenwand (102, 202) verbunden ist für die Aufnahme eines im Innern des Gehäuses (100, 200) angebrachten elektrischen Teils (108, 110, 206).

2. Dichtes Gehäuse gemäss Anspruch 1, für die Unterbringung von Batterien oder elektrischen Akkus, dadurch gekennzeichnet, dass die zweite Wand (102) den Innenraum des Gehäuses (100) in zwei aneinandergrenzende Abteile (104, 106) unterteilt, die Batterien enthalten bzw. Leiter (21, 23) des der dichten Durchführung (40) zugeordneten Speisekabels (20), wobei die genannte Wand (102) als Träger für ein Paar Kontakte (108, 110) für den Anschluss der Batterien dient.

3. Dichtes Gehäuse gemäss Anspruch 1, für eine elektrische Beleuchtungslampe, dadurch gekennzeichnet; dass die zweite Wand (202) als Träger für die elektrische Lampe (206) dient, und den Innenraum des Gehäuses (200) in zwei aneinandergrenzende Abteile (210, 212) unterteilt, die den Reflektor (208) der Lampe bzw. die Leiter (21, 23) des Speisekabels (20) aufnehmen.

4. Dichtes Gehäuse gemäss dem Anspruch 2 oder 3, dadurch gekennzeichnet, dass der flexible Flansch (28, 42) mit dem Gehäuse (10) gegossen ist, und das das Blockierungsteil (30) als hohler Knopf oder Buchse (31, 48) ausgebildet ist, von dem Kabel (20) durchquert, wobei die genannte Klemm-Oberfläche (32) im Innern des Knopfes (31, 48) angeordnet ist, um ein abgestumpftes Volumen zu bestimmen mit einem dem Kabel (20) angepassten Querschnitt.

5. Dichtes Gehäuse gemäss Anspruch 4, dadurch gekennzeichnet, dass die Klemm-Oberfläche (32) eine abgestumpfte Form aufweist und sich zwischen einer ersten Öffnung (36) und einer zweiten Öffnung (38) des hohlen Knopfs (31, 48) erstreckt, wobei die erste gegenüber dem Flansch (28, 42) gelegene Öffnung (36) einen grösseren Durchmesser aufweist als der Durchmesser des genannten Flansches in entriegelter Stellung des Knopfes (31, 48), und dass die zweite gegenüberliegende Öffnung (38) einen Durchmesser aufweist, der kleiner ist als der Durchmesser der ersten Öffnung (36).

6. Dichtes Gehäuse gemäss Anspruch 5, dadurch gekennzeichnet, dass das Blockierungsteil (30) mit einem Endstellungs-Anschlag (34) ausgerüstet ist, der auf der Höhe der ersten Öffnung (36) angeordnet ist, um gegen die Wand (22) des Gehäuses (10) in verriegelter Stellung des genannten Teiles (30) zu kommen, was dem maximalen Klemmzustand des Kabels (20) entspricht.

7. Dichtes Gehäuse gemäss einem der Ansprüche 1 bis 6, dadurch gekennzeichnet, dass das Blockierungsteil (30) in verriegelter Stellung im Endstück (24) mit der Wand des Gehäuses (10) durch Befestigungsmittel verbunden ist, wobei der Druck auf den Flansch (28, 42) innerhalb oder ausserhalb des Gehäuses (10) ausgeübt wird gemäss der Positionierung des genannten Teiles (30).

8. Dichtes Gehäuse gemäss einem der Ansprüche 1 bis 7, dadurch gekennzeichnet, dass das Blockierungsteil (30) als Schraubenmutter ausgebildet ist, die durch Schrauben auf dem Flansch (28, 42) angebracht wird.

9. Dichtes Gehäuse gemäss einem der Ansprüche 1 bis 8, dadurch gekennzeichnet, dass der flexible Flansch (42) des Endstückes (24) als elastische Lippe ausgebildet ist, die mit einer starren Protuberanz (44) des Gehäuses (10) verbunden ist, um eine ringförmige Aussparung (46) zu bilden für die Aufnahme des Blockierungsteiles (30).
